# EUROPEAN PATENT APPLICATION

(11) **EP 1 004 846 A2**
(43) Date of publication of application: **31.05.2000**
(21) Application number: 99118886.3
(22) Date of filing: 24.09.1999
(51) Int. Cl.: G01B 5/012, G01B 21/04

(54) **Work measuring probe with cleaning function**

(30) Priority: 25.11.1998 JP 33391698
(71) Applicant: Fuji Seiki Co.,Ltd., Kashihara-shi, Nara 634-8558 (JP)
(72) Inventor: Noyama, Motohiro, Kashihara-shi, Nara 634-8558 (JP); Kado, Yoshitaka, Kashihara-shi, Nara 634-8558 (JP); Kitabayashi, Katsuhiro, Kashihara-shi, Nara 634-8558 (JP); Yodoshi, Tatsuo, Kashihara-shi, Nara 634-8558 (JP)
(74) Representative: Steil, Christian, Dipl.-Ing.

(57) **Abstract**

A work measuring probe (12) comprises a contact member (16) which is brought into contact with an arbitrary portion to be measured of a work (2A) at the time of measurement and a supporting shaft (15) connected to the contact member (16) for supporting the contact member (16). The contact member (16) is provided with an outlet port (19, 20, 21, 22, 23) for jetting a fluid for cleaning the portion to be measured of the work. In the case of measurement, a cleaning fluid is started to be jetted from the outlet port (19, 20, 21, 22, 23) before the contact member (16) is brought into contact with the portion (33, 34) to be measured, to start the cleaning of the portion (33, 34) to be measured, and the contact member (16) is then brought into contact with the portion (33, 34) to be measured, to measure the coordinates of the portion (33, 34) to be measured.

## Description

### BACKGROUND OF THE INVENTION

### Field of the Invention

The present invention relates to a work measuring probe for measuring the dimensions of a work with it being mounted on a machine tool or a measuring equipment and a measuring method using the same.

### Description of Related Arts

In a machine tool, a work mounted on a work table and a tool mounted on a tool holder are relatively moved, to process the work. The following are a conventional method of measuring the dimensions of the processed work.

Specifically, the tool mounted on the tool holder is removed, and a measuring probe is mounted in place of the tool. The work table in the machine tool and the measuring probe are then relatively displaced, to bring the measuring probe into contact with a portion to be measured of the work, and find the position where the measuring probe is brought into contact with the portion to be measured of the work on the basis of the coordinate axis of the machine tool. The same operation is performed in a plurality of measuring portions. The dimensions of the work are found by calculation using obtained coordinate values of the plurality of positions, to grasp the dimensional accuracy of the work.

A lot of fine chips and cutting oil adhere to the surface of the work after the processing. With the chips thus adhering, highly precise measurement cannot be accomplished.

Therefore, the work is removed once from the work table and is cleaned at a place apart from the machine tool. In this case, however, a series of processes, i.e., i) removal of the work from the machine tool, ii) cleaning of the removed work, iii) reset of the work in the machine tool, iv) fine adjustment of the position of the set work, and v) measurement of the portion to be measured of the work, is successively carried out.

As a result of the measurement in the above-mentioned item v), when desired dimensions and accuracy are not achieved, the tool is mounted again in place of the measuring probe, to perform reprocessing, and then the above-mentioned series of processes i) to v) is again carried out. Such work is performed until desired dimensional accuracy of the work is achieved, so that a lot of labor and time are required. As a result, the productivity of products by the machine tool is reduced. In removing the work from the machine tool and cleaning the work, a human being must inevitably intervene, which prevents realization of continuous unmanned automatic processing by the machine tool.

Therefore, another method of measuring while cleaning the portions to be measured using an air gun with the work kept carried in a machine tool has been also tried. However, chips and cutting oil which are blown away from one portion to be measured are scattered and adhere to other portions to be measured. Until the measurement of all the portions to be measured is terminated, therefore, a blowing operation must be performed using the air gun, accompanied by a human being, every time the position to be measured is measured, which is troublesome.

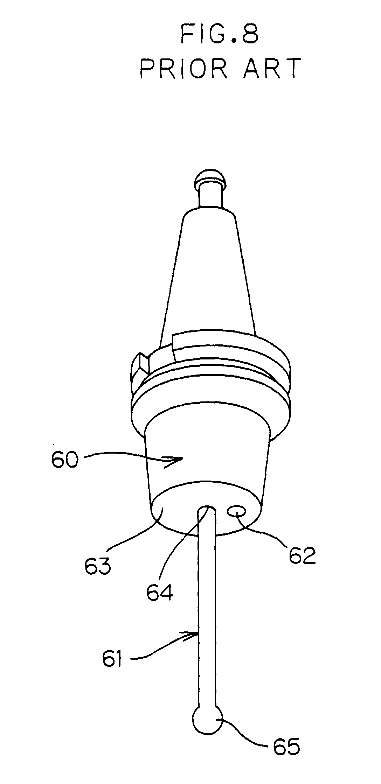

On the other hand, as shown in Fig. 8, a cleaning air outlet port 62 is provided in a holder 60 for mounting a measuring probe 61 on a spindle of a machine tool. That is, a mounting hole 64 for mounting the measuring probe 61 and the air outlet port 62 are formed on a mounting surface 63 which is the lower surface of the holder 60.

In this case, the work can be cleaned in a state where it is mounted on the machine tool. Since the distance from the air outlet port 62 to a contact section 65 at a front end of the measuring probe 61 is long, however, an effective amount of air which can contribute to the cleaning of the portion to be measured of the work out of the amount of all air blown off from the air outlet port 62 is small. As a result, it may be impossible to do sufficient cleaning.

### SUMMARY OF THE INVENTION

The present invention has been made in view of the above-mentioned problems, and its object is to provide a work measuring probe with a cleaning function capable of doing cleaning at high efficiency even in a state where a work is kept carried on a machine tool.

In order to attain the above-mentioned object, in a preferred mode of the present invention, a work measuring probe with a cleaning function which is brought into contact with a portion to be measured of a work for detecting the position of the portion to be measured is characterized by comprising a supporting shaft having first and second ends opposite to each other, a contact member connected to the second end of the supporting shaft and brought into contact with the portion to be measured, and a flow path formed inside the supporting shaft and the contact member for leading a cleaning fluid for cleaning the portion to be measured, the flow path comprising an inlet port opening toward the surface of the first end of the supporting shaft for introducing the cleaning fluid into the flow path and at least one outlet port opening toward the surface of the contact member for jetting out the cleaning fluid.

In the present embodiment, the contact member in the probe which is brought into contact with the portion to be measured is made to have the function of cleaning the portion to be measured. Therefore, the portion to be measured of the work can be efficiently cleaned directly and concentrically without demounting the work from the machine tool. Moreover, the work can be also measured simultaneously with or immediately after the cleaning.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a machine tool on which a work is carried;
Fig. 2 is a perspective view showing a state where a measuring probe according to a first embodiment of the present invention is mounted in place of a tool in the machine tool shown in Fig. 1;
Figs. 3A and 3B are respectively a side view and a bottom view of the measuring probe according to the first embodiment of the present invention;
Fig. 4 is a partially broken side view of the measuring probe shown in Fig. 3A and a work which is brought into contact with the measuring probe;
Fig. 5 is a side view of a measuring probe according to a second embodiment of the present invention;
Fig. 6 is a side view of a measuring probe according to a third embodiment of the present invention;
Figs. 7A and 7B are respectively a perspective view of a measuring probe according to a fourth embodiment of the present invention and a cross-sectional view taken along an axis of a measuring probe; and
Fig. 8 is a perspective view of a conventional measuring probe.

### DETAILED DESCRIPTION OF THE PREFERRED EMBODIMENT

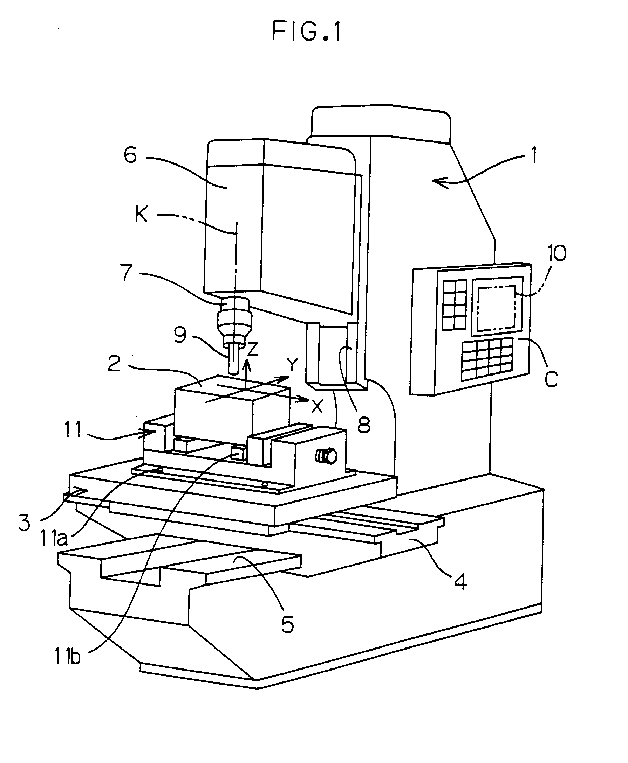

Preferred embodiments of the present invention will be described while referring to the accompanying drawings. Description is made on a first embodiment of the present invention using Figs. 1 to 4. Referring to Fig. 1, a machine tool 1 to which a measuring probe according to the first embodiment of the present invention is applied comprises a NC milling cutter or the like. The machine tool 1 is provided with a work table 3 on which a work 2 is carried. The work table 3 is movable respectively along the X-axis and the Y-axis set in the machine tool, being guided by a X-axis guide rail 4 and a Y-axis guide rail 5. Consequently, the work table 3 is movable in a plane parallel to a X-Y plane.

A spindle head 6 supports a spindle 7 having a main axis K parallel to the Z-axis set in the machine tool 1, and is movable in a direction parallel to the Z axis, being guided by a Z-axis guide rail 8. A cutting tool 9 for processing the work 2 is mounted on the spindle 7. The work table 3 is moved along the X-axis and/or the Y-axis under the control of a positioning servo mechanism. The spindle head 6 is moved along the Z-axis, so that the tool 9 mounted on the spindle 7 and the work 2 are relatively moved. As a result, the tool 9 is guided to a target position where the work 2 is to be processed.

A control box C is mounted on a side surface of the machine tool 1. The control box C contains a control section 10 composed of a microcomputer for controlling a servo system for relatively displacing the work table 3 and the spindle 7 using the X-axis, the Y-axis and the Z-axis as reference axes.

In processing the work 2, the work 2 is first set on the work table 3 in the machine tool 1 through a work mounting jig 11. 11a denotes a bolt for fixing the mounting jig 11 to the work table 3, and 11b denotes a receiving member receiving the work 2 on the mounting jig 11. The position of the work 2 is finely adjusted, for example, a predetermined surface of the work 2 is made horizontal or is made parallel to a reference surface. Thereafter, the work 2 is processed to a desired shape by the tool 9 mounted on the spindle 7.

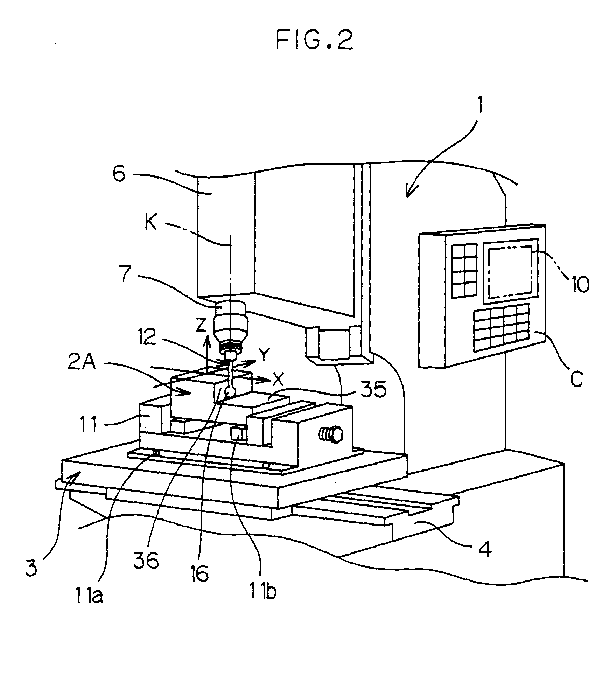

In order to examine by measurement whether or not a work 2A after the processing has attained predetermined dimensional accuracy, the tool 9 is removed, and a work measuring probe 12 (hereinafter merely referred to as a measuring probe 12) is mounted, as shown in Fig. 2, in place of the tool 9.

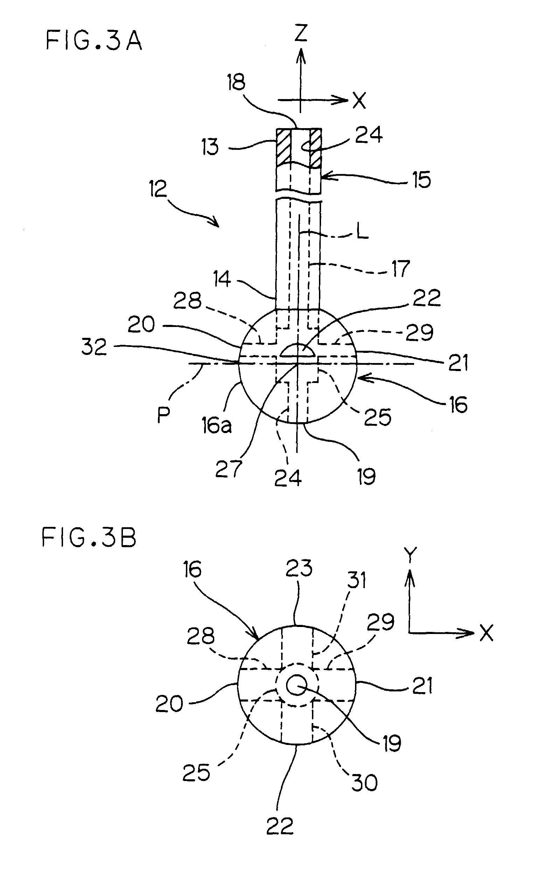

Referring to Figs. 3A and 3B, the measuring probe 12 comprises a supporting shaft 15 having first and second ends 13 and 14 opposite to each other. The supporting shaft 15 is composed of a bar which is circular in cross section. A contact member 16 which is brought into contact with a portion to be measured of the work 2A is connected to the second end 14 of the supporting shaft 15. The contact member 16 is spherical in shape. A fluid path 17 through which a cleaning fluid for cleaning the portion to be measured flows is formed inside the supporting shaft 15 and the contact member 16.

The fluid path 17 has an inlet port 18 opening toward the surface of the first end 13 of the supporting shaft 15 for introducing the cleaning fluid into the fluid path 17. The fluid path 17 comprises a first outlet port 19 and a plurality of second outlet ports 20, 21, 22 and 23 opening toward the surface of the contact member 16 for jetting out the cleaning fluid toward the portion to be measured of the work 2A.

The first outlet port 19 jets out the cleaning fluid along an axis L of the supporting shaft 15. The second outlet ports 20 to 23 are arranged, equally spaced in the circumferential direction, centered around the axis L of the supporting shaft 15, to jet out the cleaning fluid in a direction approximately perpendicular to the axis L of the supporting shaft 15.

The second end 14 of the supporting shaft 15 is fitted in a fitting hole provided in the contact member 16, so that the supporting shaft 15 and the contact member 16 are connected to each other, to form an integral unit. At the time of measurement, the axis L of the supporting shaft 15 is along a main axis K parallel to the Z-axis of the machine tool 1.

The supporting shaft 15 has a through hole 24 which is circular in cross section, for example, extending along the axis L. The through hole 24 reaches a space 25 formed at the center of the contact member 16 in a spherical shape.

The contact member 16 has a through hole 26 arranged on the opposite side of the supporting shaft 15 with the space 25 interposed therebetween and extending along the axis L. The through hole 26 extends from the space 25 and has an opening on a surface 16a of the contact member 16. The opening constitutes the first outlet port 19.

In Fig. 3A, P is a plane passing through a spherical center 27 and perpendicular to the axis L (i.e., a plane parallel to the X-Y plane). The contact member 16 has a plurality of through holes 28, 29, 30 and 31 parallel to the plane P and extending radially from the space 25, equally spaced in the circumferential direction, centered around the axis L.

In the contact member 16 in a spherical shape, a contact region 32 which is to directly touch a portion to be measured on a vertical work surface, is a circumference on which the plane P crosses the surface 16a of the contact member 16. The through holes 28, 29, 30 and 31 respectively open toward positions spaced a predetermined distance away from the contact region 32 toward the supporting shaft 15 on the surface 16a of the contact member 16, to constitute the second outlet ports 20, 21, 22 and 23.

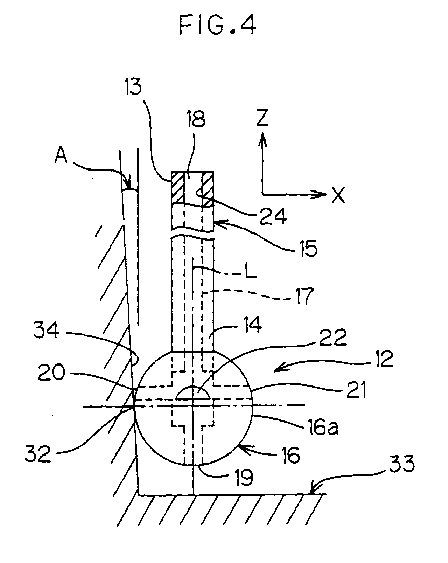

The followings are the reasons why the second outlet ports 20 to 23 are thus spaced a predetermined distance away from the contact region 32 toward the supporting shaft 15. Referring to Fig. 4, in processing a cavity 33 of a mold, for example, an outward inclination A which is referred to as a draft angle may be provided on an inner sidewall 34 of the cavity 33 in many cases in order that a molded product may be easily removed from the mold after molding. The draft angle A differs depending on the product to mold.

If the second outlet ports are provided in the contact region 32 or are provided at a predetermined distance below the contact region 32 (on the opposite side of the supporting shaft 15), the second outlet ports touch the inner sidewall 34. As a result, the contact state between the measuring probe 12 and the inner sidewall 34 is affected. Accordingly, an error occurs in the measured value.

Particularly when the positions of the plurality of second outlet ports are shifted slightly from each other in a direction parallel to the Z-axis, an error occurs in the measured value depending on whether any one of the plurality of second outlet ports is brought into contact with the portion to be measured, resulting in decreased measurement accuracy.

In order to solve such a problem, the second outlet ports 20 to 23 are provided with being shifted toward the supporting shaft 15 from the contact region 32 so that the second outlet ports 20 to 23 will not directly touch the portion to be measured. The openings of the second outlet ports 20 to 23 are semi-circular in shape, as shown in Figs. 3A, 3B and 4. The area of the opening near the contact region 32 with the work 2A, i.e., near the plane P is increased, to increase the amount of jet toward the portion to be measured of the work 2A.

When the measuring probe 12 is used, the measuring probe 12 is generally mounted on the machine tool 1, as shown in Fig. 2, in the manner that the axis L is along the main axis K parallel to the Z-axis set in the machine tool 1. Consequently, the X-axis, the Y-axis and the Z-axis referred to with respect to the measuring probe 12 according to the present invention are based on respectively the X-axis, the Y-axis and the Z-axis set in the machine tool as reference axes. Similarly when it is mounted on a dedicated measuring equipment, the X-axis, the Y-axis and the Z-axis set in the dedicated measuring equipment are also regarded as reference axes for the measuring probe 12.

Air, for example, is supplied as the cleaning fluid from the spindle 7 to the inlet port 18 of the flow path 17 in the measuring probe 12 which is mounted on the spindle 7 in the machine tool 1. The air is jetted out from the first outlet port 19 and the second outlet ports 20 to 23 which open toward the surface 16a of the contact member 16 after passing through the flow path 17.

The measuring probe 12 is mounted on the spindle 7 in the manner that the second outlet ports 20 and 21 are in a direction parallel to the X-axis and the second outlet ports 22 and 23 are in a direction parallel to the Y-axis. The first outlet port 19 is used for cleaning the portion to be measured on a first work surface 35 approximately parallel to the X-Y plane when it is about to be measured. The second outlet ports 20 to 23 are used for cleaning the portion to be measured on a side surface approximately parallel to the Z-axis, for example, a second work surface 36 shown in Fig. 2.

According to the present embodiment, the work 2A is processed to a desired shape by the tool 9, and the tool 9 shown in Fig. 1 is then replaced with the measuring probe 12 as shown in Fig. 2.

The measuring probe 12 is then moved relatively to the work 2A by the movement of the work table 3 along the X-axis and the Y-axis and the movement of the spindle head 7 along the Z-axis. Accordingly, the contact member 16 in the measuring probe 12 is conveyed to the portion to be measured on a side surface, for example, of the work 2A.

Before the contact member 16 in the measuring probe 12 touches the portion to be measured on the second work surface 36 approximately parallel to a Y-Z plane while the contact member 16 is approaching the portion to be measured of the work 2A, the supply of cleaning air from the spindle 7 is started. The air is jetted toward the portion to be measured from the second outlet ports 20 to 23 of the contact member 16, to clean the portion to be measured.

The position of the portion to be measured is detected on the basis of the X-axis, the Y-axis and the Z-axis which are reference axes of the machine tool 1 with the contact member 16 brought into contact with the portion to be measured. The jetting of the air may be stopped by the time that the contact member 16 touches the portion to be measured. Further, the air may be still continuously kept jetted while the contact member 16 is in contact with the portion to be measured to detect the position of the portion to be measured. If the measuring probe is not so rigid, the jetting of the air should be stopped before detecting the position in order that the detection will not be affected by the vibration caused by the air jet.

A conductive current flows between the measuring probe 12 and the work 2A by the contact of the contact member 16 in the measuring probe 12 with the work 2A. The control section 10 stops the relative movement between the measuring probe 12 and the work table 3 using the generation of the conductive current as a trigger, and read the coordinate values of the reference axes corresponding to the position where the measuring probe is stopped and converts them into coordinate values corresponding to the position of the portion to be measured.

The measurement is made in a plurality of positions of the work 2A, and various dimensions of the work 2A are found on the basis of the plurality of measured positions, to grasp the dimensional accuracy. The control section 10 performs a series of operations such as control of a servo system for relatively displacing the work table 3 and the spindle 7 using the X-axis, the Y-axis and Z-axis as reference axes, reading of coordinate values, and calculation of dimensions and dimensional accuracy using the read coordinate values.

If the dimensions and the dimensional accuracy which are obtained by the measurement and the calculation are within allowable ranges, the current processing step is terminated to proceed to the subsequent step. If the obtained dimensional accuracy or the like departs from an allowable value, the measuring probe 12 is replaced with the cutting tool 9 again to perform secondary processing. Thereafter, the tool 9 is replaced with the measuring probe again to make measurement.

When the contact member 16 is brought into contact with the portion to be measured of the first work surface 35 parallel to the X-Y plane of the work 2A, the portion to be measured of the first work surface 35 is cleaned by the air jetted out from the first outlet port 19.

In the present embodiment, the contact member 16 in the measuring probe 12 which is brought into contact with the portion to be measured has the function of cleaning the portion to be measured. Therefore, the portion to be measured of the work 2A can be efficiently cleaned directly and concentrically without demounting the work 2A from the machine tool 1. Moreover, the work 2A can be measured simultaneously with or immediately after the cleaning.

Particularly, each of the outlet ports 19 to 23 jets out air from the vicinity of the portion to be measured. Therefore, chips or the like adhering to the portion to be measured can be reliably blown away and sufficient cleaning is accomplished.

It is possible to efficiently perform the operations from the processing to the measurement of the dimensions in a state where a workpiece is kept carried on the machine tool using the invented measuring probe. Therefore, it is possible to significantly shorten processing time and to contribute to an improvement of productivity because unmanned automatic processing is possible.

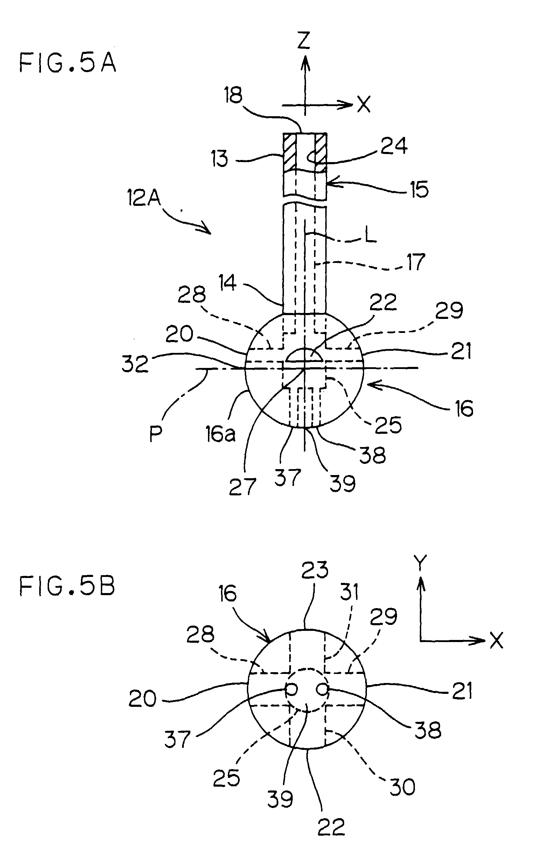

Figs. 5A and 5B are a partially broken sectional view and a bottom view of a measuring probe 12A according to a second embodiment of the present invention. Referring to Figs. 5A and 5B, the second embodiment differs from the first embodiment in the following. That is, at least a pair of outlet ports 37 and 38 is provided in positions spaced a predetermined distance away from an axis L. In this case, the first outlet ports 37 and 38 are spaced a predetermined distance away from a contact region 39 in a contact member 16. Therefore, the same effect as that in a case where the second outlet ports 20 to 23 are spaced apart from the contact region 32, as described above, can be produced.

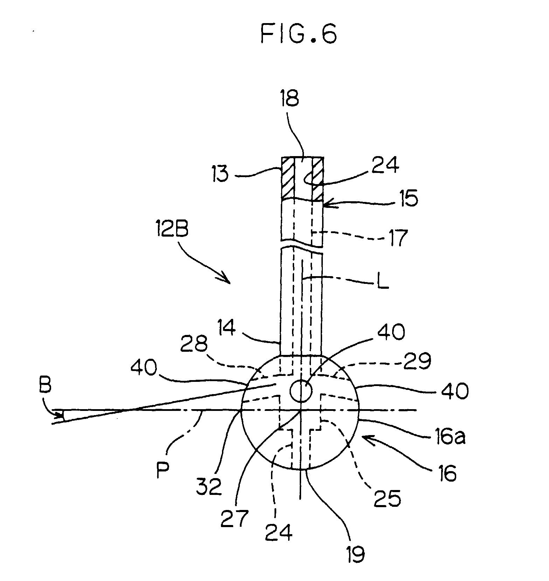

Fig. 6 is a side view of a measuring probe 12B according to a third embodiment of the present invention. Referring to Fig. 6, the third embodiment differs from the first embodiment in the following. That is, in the first embodiment, the second outlet ports 20 to 23 jet out air in a direction parallel to the plane P, as shown in Figs. 3A and 3B. Contrary to this, in the third embodiment, a plurality of second outlet ports 40 in a circular shape jet out air in a direction at an angle B to a plane P. Accordingly, it is possible to efficiently jet out air toward a portion to be measured of a work 2A.

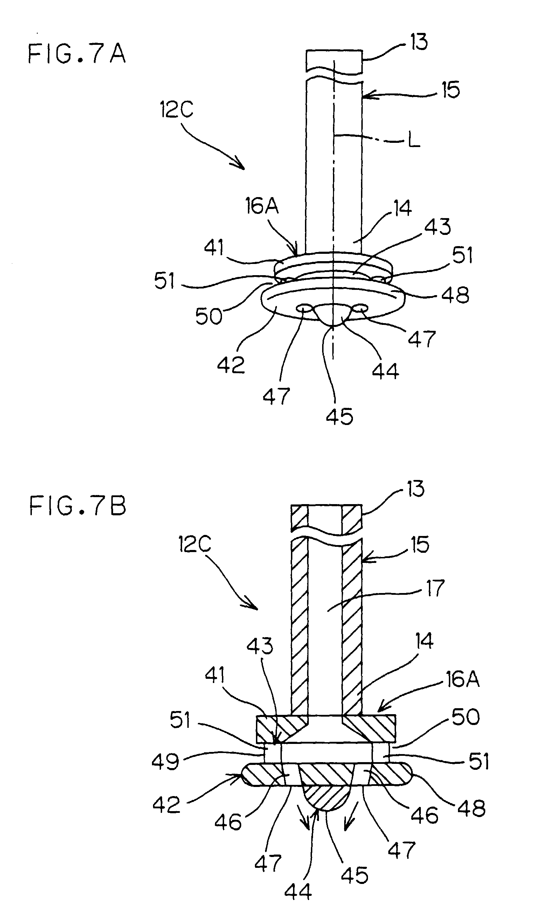

Figs. 7A and 7B are respectively a perspective view and a cross-sectional view of a measuring probe 12C according to a fourth embodiment of the present invention. Referring to Figs. 7A and 7B, in the fourth embodiment, a contact member 16A in a disc shape comprises an annular plate 41 connected to a second end 14 of a supporting shaft 15, a disc 42 opposite to the annular plate 41 a predetermined distance away therefrom, and a spacer ring 43 interposed between the annular plate 41 and the disc 42. The annular plate 41, the spacer ring 43, and the disc 42 are centered around an axis L of the supporting shaft 15.

A projection 44 projecting toward the opposite side of the supporting shaft 15 along the axis L of the supporting shaft 15 is formed on the lower surface of the disc 42. The projection 44 has a top 45 in a semi-spherical shape serving as a contact region. The disc 42 has a pair of through holes 4.6 formed on both sides with the projection 44 interposed therebetween. First outlet ports 47 are respectively formed by outlets of through holes 46. Since the through holes 46 are inclined so as to be along an inclined surface of the projection 44, each of the first outlet ports 47 is arranged in a position excluding the contact region and can efficiently jet air toward the top 45 serving as a contact region.

The disc 42 has the diameter larger than those of the annular plate 41 and the spacer ring 43. An outer peripheral edge of the disc 42 is semi-circular in cross section, its top constituting a contact region 48.

The diameter of the spacer ring 43 is made smaller than those of the annular plate 41 and the disc 42. An annular groove 50 defined by opposite surfaces of the annular plate 41 and the disc 42 is formed by taking an outer peripheral surface 49 of the spacer ring 43 as its bottom. The spacer ring 43 opens toward the outer peripheral surface 49, to form a plurality of second outlet ports 51 communicating with the annular groove 50.

In the present embodiment, air from the second outlet ports 51 are jet out from the whole periphery of the contact member 16A through the annular groove 50. Therefore, the second outlet ports 51 can jet the air along the upper surface of the disc 42 in a range of approximately 360° around a center axis L.

The portion to be measured, on the second work surface 36 of the work 2A shown in Fig. 2, which is brought into contact with the contact region 48 at the outer peripheral edge of the disc 42, can be cleaned irrespective of the position of the portion to be measured around the Z-axis.

The shape of the spacer ring 43 can be changed, thereby making it possible to change the direction in which air is jetted and the amount of jetted air along an X-Y plane.

Besides each of the above mentioned embodiments, it is possible to change the shape of the measuring probe into various shapes. Further, it is possible to suitably set the shapes, the positions, the number, and the jetting angles of cleaning fluid outlet ports in the contact member 16A depending on the manner of use. The cleaning fluid may be gas or a liquid.

Although in each of the above-mentioned embodiments, the cleaning fluid inlet port 18 is provided at the first end 13 of the supporting shaft 15, the present invention is not limited to the same. For example, it may be formed in an intermediate portion between the first and second ends 13 and 14 of the supporting shaft 15 with it being directed sideward. In this case, a pipe for supplying a cleaning fluid may be connected to the inlet port in the intermediate portion of the supporting shaft 15, to supply the cleaning fluid to the flow path 17 in the supporting shaft 15 directly from the outside without through the spindle 7.

When the measuring probe is mounted on the spindle through a holder as in Fig. 8, the pipe for supplying a cleaning fluid may be connected to the side of the holder, to supply the cleaning fluid to the measuring probe through the holder.

Although in each of the above-mentioned embodiments, contact between the measuring probe and the portion to be measured is detected by producing a conductive current therebetween, the present invention is not limited to the same. For example, the supporting shaft 15 is supported on the holder so as to be displaceable along its axis, to elastically urge the supporting shaft 15 toward the contact member 16. When the supporting shaft 15 is brought into contact with the portion to be measured, a normally closed type contact provided in the holder is opened or a normally open type contact is closed depending on the contact of the supporting shaft 15. The control section accepts coordinate values using an open signal or a close signal of the contact as a trigger.

The supporting shaft and the contact member may be made either seperately or in a solid form.

The measuring probe may not be necessarily mounted upon being replaced with the tool 9 mounted on the spindle 7. For example, it may be mounted upon adding a suitable mounting tool to the spindle head 6 or the like. In this case, the tool and the measuring probe need not be replaced with each other for each measurement.

It is possible to replace the tool and the measuring probe with each other by a robot (not shown).

Furthermore, the measuring probe according to the present invention can be similarly utilized for not only a rotary cutting work machine such as an NC milling cutter but also a discharge work machine or the like. It can be also utilized for a dedicated measuring equipment.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A work measuring probe (12; 12A; 12B; 12C) with a cleaning function which is brought into contact with a portion (33, 35, 34, 36) to be measured of a work (2A) for detecting a position of said portion (33, 35, 34, 36) to be measured, comprising:
a supporting shaft (15) having first and second ends (13, 14) opposite to each other;
a contact member (16; 16A) connected to the second end (14) of said supporting shaft (15) and brought into contact with said portion (33, 35, 34, 36) to be measured;
characterized by
a flow path (17) formed inside said supporting shaft (15) and the contact member (16; 16A) for leading a cleaning fluid for cleaning said portion (33, 35, 34, 36) to be measured,
said flow path (17) comprising an inlet port (18) opening toward the surface of the first end (13) of the supporting shaft (15) or an intermediate portion between the first end (13) and the second end (14) for introducing the cleaning fluid into the flow path (17), and at least one outlet port (19, 20-23; 37, 38, 20-23; 19, 40; 47, 51) opening toward a surface (16a) of the contact member (16; 16A) for jetting out the cleaning fluid.

2. The probe of claim 1, characterized in that said outlet port (19, 20-23; 37, 38, 20-23; 19, 40; 47, 51) comprises at least one opening (20, 21, 22, 23; 37, 38; 40; 47, 51) arranged a predetermined distance away from a contact region (32, 39; 45, 48) of the contact member (16; 16A) which directly touches the portion (33, 35, 34, 36) to be measured.

3. The probe of claim 1, characterized in that said outlet port (19, 20-23; 37, 38, 20-23; 19, 40; 47, 51) comprises an opening (19; 37, 38; 47) for jetting out the cleaning fluid in a direction approximately parallel to an axis (L) of the supporting shaft (15).

4. The probe of claim 3, characterized in that the opening (37, 38; 47) for jetting out the cleaning fluid in a direction approximately parallel to the axis (L) of said supporting shaft (15) comprises an opening (37, 38; 47) arranged in the vicinity of the contact region (39; 45) of the contact member (16; 16A) which directly touches the portion to be measured corresponding to the opening (37, 38; 47).

5. The probe of any of claims 1 - 4, characterized in that said outlet port (19, 20-23; 37, 38, 20-23; 19, 40; 47, 51) comprises at least one opening (20, 21, 22, 23; 40; 51) for jetting out the cleaning fluid in a direction approximately perpendicular to an axis (L) of the supporting shaft (15).

6. The probe of claim 5, characterized in that the opening (20, 21, 22, 23; 40; 51) for jetting out the cleaning fluid in a direction approximately perpendicular to the axis (L) of said supporting shaft (15) comprises an opening (20, 21, 22, 23; 40; 51) arranged between the contact region (32; 48) of the contact member (16; 16A) which directly touches the portion (34, 36) to be measured corresponding to the opening (20, 21, 22, 23; 40; 51), and the supporting shaft (15).

7. The probe of claim 5 or 6, characterized in that said contact member (16; 16A) has a peripheral surface centered around the axis (L) of the supporting shaft (15), an annular groove (50) is formed on said peripheral surface, and the opening (51) for jetting out the cleaning fluid in a direction approximately perpendicular to the axis (L) of said supporting shaft (15) comprises an opening (51) arranged on an inner surface (49) of said annular groove (50).

8. The probe of any of claims 1 - 7, characterized in that said outlet port (19, 20-23; 37, 38, 20-23; 19, 40; 47, 51) comprises a first outlet port (19; 37, 38; 47) for jetting out the cleaning fluid in a direction approximately parallel to an axis (L) of the supporting shaft (15), and a second outlet port (20, 21, 22, 23; 40; 51) for jetting out the cleaning fluid in a direction approximately perpendicular to the axis (L) of the supporting shaft (15).

9. The probe of any of claims 1 - 8, characterized in that said contact member (16; 16A) comprises a contact member (16) in a spherical shape.

10. A method of detecting a position of a portion (33, 35, 34, 36) to be measured using a work measuring probe (12; 12A; 12B; 12C) with a cleaning function, comprising
a supporting shaft (15) having first and second ends (13, 14) opposite to each other,
a contact member (16; 16A) connected to the second end (14) of said supporting shaft (15) and brought into contact with said portion (33, 35, 34, 36) to be measured,
characterized by
a flow path (17) formed inside said supporting shaft (15) and the contact member (16; 16A) for leading a cleaning fluid for cleaning said portion (33, 35, 34, 36) to be measured,
said flow path (17) comprising an inlet port (18) opening toward the surface of the first end (13) of the supporting shaft (15) or an intermediate portion between the first end (13) and the second end (14) for introducing the cleaning fluid into the flow path (17), and at least one outlet port (19, 20-23; 37, 38, 20-23; 19, 40; 47, 51) opening toward a surface (16a) of the contact member (16; 16A) for jetting out the cleaning fluid,
said method comprising sequentially the steps of:
starting to clean the portion (33, 35, 34, 36) to be measured by jetting out the cleaning fluid from the outlet port (19, 20-23; 37, 38, 20-23; 19, 40; 47, 51) before the contact member (16; 16A) in said probe (12; 12A; 12B; 12C) is brought into contact with the portion (33, 35, 34, 36) to be measured; and
bringing the contact member (16; 16A) in said probe (12; 12A; 12B; 12C) into contact with the portion (33, 35, 34, 36) to be measured, to detect the position of the portion (33, 35, 34, 36) to be measured.

11. The method of claim 10, characterized in that the jetting of the cleaning fluid for cleaning said portion (33, 35, 34, 36) to be measured is terminated at or before the time that the contact member (16; 16A) in said measuring probe (12; 12A; 12B; 12C) comes into contact with the portion (33, 35, 34, 36) to be measured.

12. The method of claim 10, characterized in that the jetting of the cleaning fluid for cleaning said portion (33, 35, 34, 36) to be measured is terminated prior to detecting the position of the portion (33, 35, 34, 36) to be measured after the contact member (16; 16A) in said measuring probe (12; 12A; 12B; 12C) comes into contact with the portion (33, 35, 34, 36) to be measured.
